# FASCICULE DE BREVET EUROPEEN

(11) **EP 4 402 553 B1**
(45) Date de publication et mention de la délivrance du brevet: **16.07.2025**
(21) Numéro de dépôt: 22789524.0
(22) Date de dépôt: 15.09.2022
(51) Int. Cl.: G05D 1/00, G08G 1/0968, B60L 53/14, H04W 4/029, H04W 4/40, H04W 4/80

(54) **SYSTÈME DE TRANSPORT COLLECTIF PRIVATIF AUTOMATIQUE BI-MODE**
AUTOMATISCHES ÖFFENTLICHES/PRIVATES TRANSPORTSYSTEM MIT ZWEI BETRIEBSARTEN
DUAL-MODE AUTOMATIC PUBLIC/PRIVATE TRANSPORT SYSTEM

(30) Priorité: 15.09.2021 FR 2109702
(43) Date de publication de la demande: 24.07.2024
(73) Titulaire: Parienti, Raoul, 06000 Nice (FR)
(72) Inventeur: Parienti, Raoul, 06000 Nice (FR)
(74) Mandataire: Bonneau, Florence
(86) Numéro de dépôt international: PCT/EP2022/075630
(87) Numéro de publication internationale: WO 2023/041636

(56) Documents cités:
- EP-A1- 2 310 924
- US-A1- 2013 336 537
- US-B1- 9 014 902

## Description

### DOMAINE TECHNIQUE

La présente invention concerne un système de transport collectif privatif constitué d'une flotte de véhicules, destiné à transporter un ou plusieurs passagers, à l'instar d'un véhicule personnel, d'un point de départ vers un point d'arrivée, dans le cadre d'une ville, d'une agglomération, ou encore en zone inter urbaine.

Le but de l'invention est d'apporter une solution complémentaire aux transports publics urbains de masse, tels que bus, métro, ou tram, dont l'utilité est incontournable. D'autres moyens de transports se sont développés, tels que vélos, trottinettes, véhicules en libre-service, applications de covoiturage, qui apportent des solutions intéressantes mais partielles.

Des navettes autonomes ont vu le jour sur des parcours balisés, roulant à faible vitesse et s'arrêtant à chaque arrêt afin de permettre la montée et la descente des passagers. Cette solution est implantée sur certains parcours bien déterminés, notamment sur des grands axes, mais ne permet pas de se déplacer de tout point de départ vers tout point de destination, dans un climat privatif et convivial d'un véhicule personnel.

L'invention présentée dans le présent document remédie à tous ces inconvénients. De plus, elle offre une alternative pertinente aux véhicules personnels qui encombrent et polluent nos cités et posent des problèmes de stationnement récurrents et couteux.

L'invention décrite dans le présent document apporte une solution pratique, rationnelle, conviviale, écologique et économique et offre un service « plus ». En effet, pour l'usager, tout se passe comme si tout à chacun disposait d'un véhicule avec un chauffeur privé en permanence, et ce, à un coût bien inférieur à celui d'un véhicule personnel, car chaque véhicule est utilisé par un grand nombre de personnes chaque jour. De plus, le système propose le co-voiturage. Aussi, l'invention offre une véritable alternative au véhicule personnel qui encombre et pollue les villes et les agglomérations.

Le système objet de l'invention est bi-mode, car les véhicules disposent de 2 modes de fonctionnement :
- 1- Électrique et automatique (sans conducteur) en ville, ce mode sera utilisé dans la grande majorité des déplacements.
- 2- Thermique et à conduite manuelle hors de la vile. Optionnellement, le mode 2 à conduite manuelle peut fonctionner en électrique.

En mode automatique, les sièges avant et arrière sont en vis-à-vis. En mode conduite manuelle l'utilisateur conduit normalement le véhicule, après pivotement d'un demi-tour du siège conducteur ou des 2 sièges avant. Les 2 sièges avant sont conçus pour assurer cette fonction de rotation.

### ETAT DE LA TECHNIQUE

Des développements lourds mettant en place des véhicules dit autonomes, ont été testés en Californie depuis 2009 par un grand groupe américain. Ces véhicules devaient à terme fonctionner sans chauffeur. Pour se repérer les véhicules utilisaient essentiellement des dispositifs LIDAR (light detection and ranging), détection et estimation de la distance par laser. Il s'agit d'un dispositif émettant des multifaisceaux laser infrarouge dont la réflexion permettait de générer une image de l'environnement.

Mais, après avoir parcouru des millions de kilomètres, en mode autonome niveau 2 à 3, avec un chauffeur derrière le volant pouvant reprendre le contrôle, et investi des sommes considérables, le groupe américain a fait marche arrière. En effet, en novembre 2018, lors d'une conférence de presse, le président de l'opérateur historique, a reconnu la très grande complexité de l'objectif visé, et a annoncé que la voiture 100% autonome (niveau 5) ne sera jamais sur la route et que cet objectif semble utopique, voire quelque peu un mythe.

D'autres grands groupes ont suivi le premier opérateur Californien avec des objectifs similaires de véhicule sans chauffeur, mais force est de constater qu'à ce jour, aucune solution de voiture sans chauffeur niveau 5 (sans volant ni pédales) n'est encore sur le marché et que la promesse du véhicule 100% autonome, (niveau 5), reste une promesse à ce jour.

Certains experts annoncent l'arrivée de ce type de véhicule pour 2030, 2040 voire bien plus tard, mais nombres d'entre eux, restent très réservés sur la réalité du futur du véhicule 100% autonome (niveau 5). Par ailleurs, dans l'hypothèse où un véhicule personnel totalement autonome voyait le jour, serait selon de nombreux experts, une véritable catastrophe pour nos villes et Métropoles. Cette éventualité provoquerait un accroissement très important du nombre de véhicules personnels roulant et stationnant, et génèrerait des embouteillages inextricables, provoquant l'asphyxie de nos cités.

L'état de l'art le plus proche de l'invention présentée, est le brevet EP 2 310 924 B1. Ce document décrit un système de transport essentiellement urbain permettant de transporter une ou plusieurs personnes d'un point à un autre point en suivant une bande colorée collée au sol, par optoguidage, ladite bande colorée (10) intègre des puces RFID (acronyme de Radio Fréquence Identification, pour identification radiofréquence) qui permettent une localisation précise périodiquement.

Cette innovation présente un inconvénient majeur. En effet, si la bande colorée (10), au sol, est masquée par la neige, le verglas, le sable, ou pour tout autre raison, l'invention devient inopérante car la bande colorée n'est plus visible, et au bout de quelques mètres de roulage, le véhicule s'arrête. En effet, ladite invention décrite dans le document cité, n'intègre pas de centrale inertielle (1), et donc ne dispose des moyens capables de numériser la bande colorée (10) et de suivre une bande virtuelle informatique (20) si la bande colorée (10) n'est plus visible.

L'invention présentée dans le présent document remédie à cet inconvénient et permet au véhicule (6) de se déplacer en toute sécurité quelles que soient les conditions atmosphériques, avec, ou sans la visibilité de la bande colorée (10), fixée ou peinte sur la chaussée

### EXPOSE SUCCINCT DE L'INVENTION

L'invention est constituée d'une pluralité de véhicules, capables de transporter une ou plusieurs personnes, d'un quelconque point de départ vers une destination choisie, (de porte à porte), et ce, sans chauffeur de façon totalement automatique par optoguidage en suivant une bande colorée, fixée sur la chaussée qui intègre des puces RFID ou transpondeur. Caractérisée, en ce que chaque véhicule, intègre une centrale inertielle, capable de gérer l'ensemble des paramètres liés aux déplacements du véhicule, et de définir le trajet dudit véhicule, en identifiant une succession de points du trajet, soit une image virtuelle informatique de la bande colorée dudit trajet. L'ensemble des données des trajets effectués par chaque véhicule, est transmis au système informatique centralisé, lequel va transmettre à son tour lesdites données des trajets, à tous les ordinateurs de bord de chaque véhicule du parc. Ainsi, ledit système de transport, continue à fonctionner normalement même si la bande colorée n'est plus visible, en suivant la bande colorée virtuelle informatique

### BREVE DESCRIPTION DES FIGURES

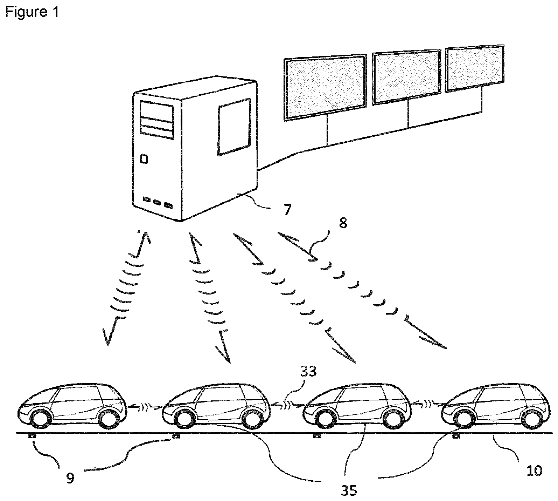

La figure 1 représente un train virtuel (35) de véhicules (6) communicant entre eux selon des moyens (33), et communiquant avec le système informatique centralisé (7) via une liaison chiffrée (8). La figure 1 montre également la bande colorée (10) qui intègre des puces RFID (9).

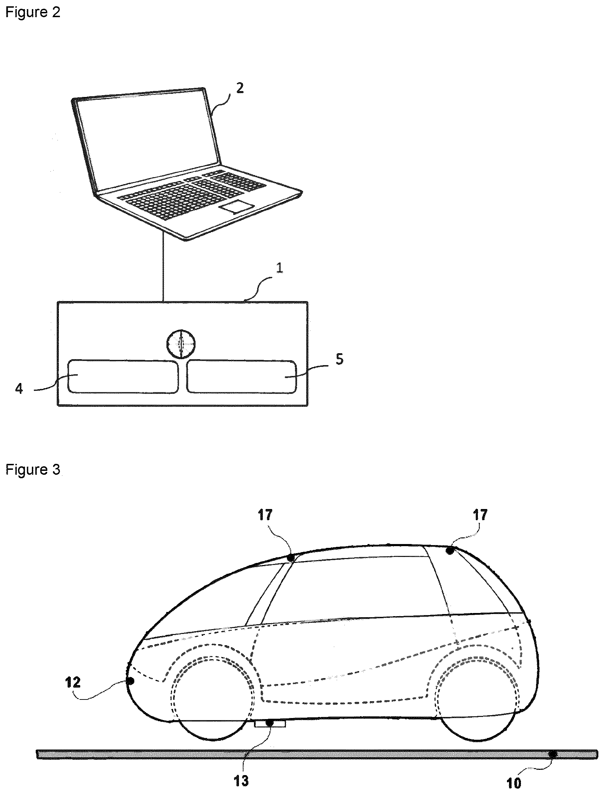

La figure 2 montre l'ordinateur de bord (2) en connexion avec la centrale Inertielle (1), pourvue d'un accéléromètre (4) et d'un gyroscope (5) et d'une boussole.
La figure 3 montre l'implantation de la caméra de suivi de la bande colorée (10), des caméras (17), et de l'antenne RFID (13).

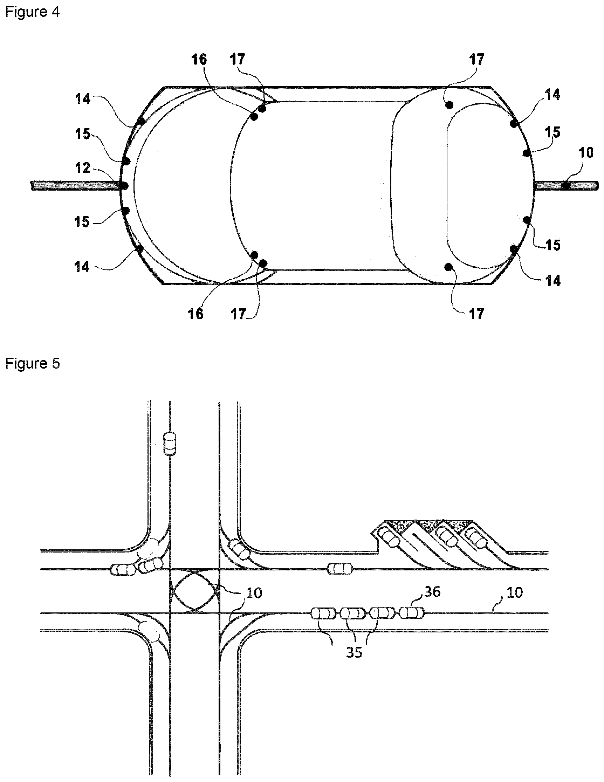

La figure 4 montre l'implantation de la caméra (12) de suivi de la bande colorée (10), des capteurs infrarouges (14), des capteurs ultrasons (15), et des radars hyperfréquences (16), ainsi que la bande colorée (10) et des caméras (17).
La figure 5 montre une configuration d'implantations des bandes colorée (10), notamment dans un carrefour, on voit également des véhicules en arrêt sur des angles d'un carrefour notamment pour la prise en charge ou la dépose des passagers, et d'autres en stationnement. On voit également un train de véhicules (35) qui suit un véhicule maitre (36).

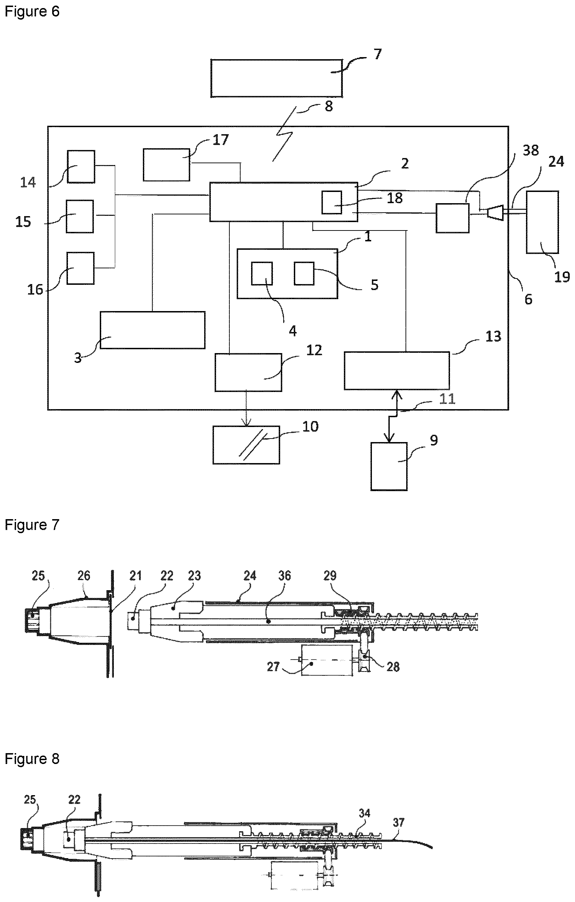

La figure 6 montre un organigramme l'invention coopérant avec les sous-ensembles à distance : avec le système informatique centralisé (7), via une communication chiffrée (8); une caméra (12) permet au véhicule (6) de suivre la bande colorée (10), enfin une antenne (13) permet d'échanger des données avec les puces RFID (9). L'invention coopère avec une borne (19) par contacts permettant le rechargement de la batterie (38), du véhicule et les échanges de données des parcours, entre l'ordinateur (2) et le système informatique centralisé (7), via un bras semi rigide (24).

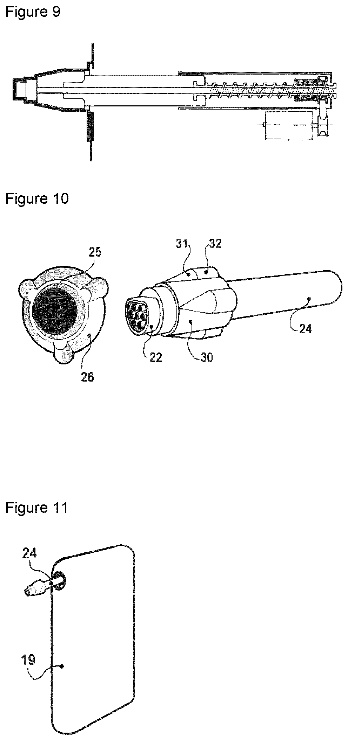

La figure 7, la figure 8 et la figure 9 montrent le dispositif de connexion entre la borne de rechargement et de transfert de données. Un moteur (27), agissant sur une courroie et entrainant la rotation d'un écrou (29) coopérant avec une vis (34), provoque la translation du bras semi rigide (24) solidaire avec la vis (34), jusqu'à la connexion de la prise mâle (22) avec la prise femelle (25).
La figure 10 montre les détails (30), (31) et (32) permettant le guidage de la prise mâle (22) vers la prise femelle (25).
La figure 11 représente la borne (19) avec le bras semi-rigide (24) sorti.

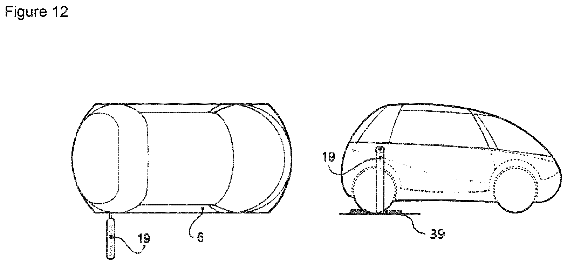

La figure 12 représente le véhicule (6) connecté à la borne (19) vue de dessus et vue de côté.

### DESCRIPTION DETAILLEE DE L'INVENTION.

Ce qui caractérise l'invention, est le rôle fondamental de la centrale inertielle (1) connectée à un ordinateur de bord (2), mémorisant des logiciels ad hoc, ladite centrale inertielle de type MEMS (acronyme de Micro-Electro-Mecanical-System pour système électromécanique miniature).

A titre d'exemple on peut citer la centrale inertielle MPU-6050 (marque déposée, « MPU » étant l'acronyme de memory protection unit pour unité de protection de mémoire), en combinaison avec une carte Arduino (marque déposée), dédiée et des servo moteurs adaptés, connectés à une unité de commande (3). Ladite centrale est équipée d'un accéléromètre trois axes (4), et d'un gyroscope trois axes (5), et d'une boussole. Ainsi, l'élément fondamentale de l'invention est la centrale inertielle (1), qui est capable avec le concours de l'ordinateur de (2), de numériser les bandes colorées (10) que le véhicule suit par optoguidage, et de générer des bandes virtuelles informatiques (20), image des bandes colorées (10). Lesdites bandes virtuelles informatiques (20), sont mémorisées dans la mémoire de l'ordinateur de bord (2), puis retransmis à tous les véhicules (6) selon une procédure définie plus loin. Les modalités de la numérisation de la bande colorée (10) est décrite plus loin.

Un véhicule (6) se déplace en suivant par optoguidage la bande colorée (10). Dès l'instant que l'on connait le point de départ et la vitesse initiale, la centrale inertielle (1), est capable d'exploiter l'ensemble des paramètres liés aux déplacements du véhicule (6), à savoir, la direction, les accélérations, les durées, ainsi que toutes les variations successives de ces différents paramètres. L'ensemble du traitement des données précitées permet à la centrale inertielle (1), assisté d'un ordinateur de bord (2), de définir l'ensemble de points successifs du trajet parcouru, recréant ainsi une bande colorée virtuelle informatique (20), image de la bande colorée réelle (10). En effet, la vitesse est la dérivée du trajet par rapport au temps, l'accélération est la dérivée de la vitesse par rapport au temps, par conséquent, par la résolution d'une double intégration, il est possible de définir à chaque instant la position d'un point aux constantes initiales près, à savoir la vitesse initiale et le point de départ, comme vu plus haut. Dans notre cas de figure ces constantes sont identifiées. Comme cela est précisé plus loin, le point de départ est le point de prise en charge du, ou des passager(s) parfaitement identifié(s), grâce aux coordonnées (x,y,z) précises des puces RFID (9), affinées par odométrie (distance parcourue par nombre de tours de roues), et la vitesse initiale est nulle, car elle correspond au moment de la prise en charge du ou des passager(s). Ainsi les données fournies par centrale inertielle connectée à l'ordinateur de bord (2), pourvu d'une carte électronique idoine et des logiciels ad hoc permet d'identifier une succession de points du trajet. Pour être plus précis ; la concaténation des segments consécutifs définis par les points successifs du trajet identifiés par la centrale inertielle (1), va définir une image virtuelle informatique (20) de la bande colorée (10) dudit trajet parcouru.

Ainsi, l'invention permet, en cas de non visibilité de la bande colorée (10), pour des raisons atmosphériques, neige, verglas, sable, malveillance ou pour tout autre raison, au véhicule de poursuivre normalement le trajet programmé, en suivant la bande virtuelle informatique (20).

L'ordinateur de bord (2), ainsi que système informatique centralisé (7) sont pourvus d'un système expert associé à des logiciels et des algorithmes d'Intelligence Augmentée, désigné dans le document par « IA », encore appelée intelligence artificielle. Les logiciels et algorithmes liés à l'IA vont permettre au système expert de mémoriser l'ensemble des informations liées aux trajets et à l'ensemble des situations possibles afin d'intégrer l'expérience acquise au cours de l'usage. Ce qui permet à l'IA, qui intègre un ensemble de logiciels et des algorithmes sophistiqués, capables de prendre la même décision que l'homme éclairé dans toutes les situations envisageables. En réalité, le fait que le véhicule suive une bande colorée (10) par optoguidage ou encore en suivant la bande virtuelle informatique (20), réduit considérablement le rôle de l'IA qui est intégrée dans l'invention. L'IA sera mise en œuvre pour répondre à des cas marginaux et/ou extrêmes.

Il est préférable de multiplier le nombre de centrales inertielles (1), fonctionnant simultanément afin que l'ordinateur de bord (2) vérifie la cohérence des données fournies par chacune desdites centrales inertielles (1), en combinaison avec l'IA, qui mémorisent des algorithmes de la « théorie de la décision », afin que l'IA prenne la meilleure décision dans toutes les situations envisageables. Une telle redondance permet d'obtenir un haut niveau de fiabilité du système.

A titre d'exemple si trois centrales inertielles fonctionnent simultanément, l'algorithme de « prise de décision » peut être programmé, pour qu'au moins deux d'entre elle déterminent le même trajet, pour valider ledit trajet.

Lorsque le véhicule va se recharger à une borne de rechargement spécifique (19), décrite plus loin, l'ensemble des données des trajets effectués par chaque véhicule est transmis au système informatique centralisé (7), puis à son tour ledit système informatique centralisé (7), retransmet l'ensemble desdites données correspondantes aux trajets de chaque véhicule, à tous les véhicules (6) du parc, via la borne de rechargement (19). Précisons que les données des trajets effectués, constituent les données des bandes virtuelles informatiques (20,) des bandes colorées (10) numérisées.

Ainsi, tous les véhicules vont recevoir et mémoriser l'ensemble des images virtuelles informatiques (20) de tous les trajets effectués par tous les véhicules. Pour éviter une surcharge de transferts de données inutiles, le système informatique centralisé (7) distribue à chaque véhicule les images virtuelles informatiques (20), des trajets non déjà mémorisés dans la mémoire de l'ordinateur de bord (2) dudit véhicule.

Selon un mode de réalisation de l'invention, lorsque le véhicule (6) se déplace, la centrale inertielle (1) associée à l'ordinateur de bord va exploiter l'ensemble des paramètres liés aux déplacements, décrit plus haut : point de départ, vitesse, accélération, direction, temps, décrit plus haut, et va identifier les points de tous trajets toutes les 100 millisecondes. A titre d'exemple si le véhicule roule à 36 Km/h parcourant ainsi 10 mètres par secondes, tous les 100 millisecondes le véhicule va parcourir un mètre. Ainsi, entre deux points consécutifs tel que définis plus haut, la longueur du segment est d'un mètre de longueur.

Selon un mode de réalisation plus élaboré, la fréquence d'identification des points des points du trajet par la centrale inertielle (1) sera ajustée par rapport à la vitesse afin que la distance entre deux points consécutifs d'un quelconque segment du trajet soit de même longueur. A titre d'exemple si le véhicule (6) roule à 18 Km/h parcourant ainsi cinq mètres par seconde, alors la fréquence d'identification des points du trajet s'effectuera toutes les 200 millisecondes. Ainsi la longueur des segments définie entre deux points consécutifs sera également d'un mètre.

Ainsi, la centrale inertielle va identifier les points des trajets à intervalle de temps régulier ou variable, dont la concaténation des segments consécutifs définis par les points successifs du trajet identifiés par la centrale inertielle (1), comme vu plus haut, va définir une image virtuelle informatique (20) de la bande colorée (10) dudit trajet parcouru.

Chaque puce RFID mémorise un code identifiant unique (11), à chaque code identifiant unique correspond les coordonnées (x,y,z) précises de ladite puce RFID, mémorisées dans l'ordinateur de bord (2) de tout véhicule (6). Chaque fois que l'ordinateur (2) du véhicule (6) constate une dérive par rapport à la localisation précise fournie par la puce RFID intégrée sur la bande colorée (10), une correction est apportée à la trajectoire grâce à l'action de la direction via de l'unité de commande (3), et la centrale inertielle est recalée sur les coordonnées précises fournies par la puce RFID.

Pour des raisons de sécurité et pour éviter toute falsification, la bande virtuelle (20) résultant de la concaténation des segments du trajet, c'est-à-dire la reconstruction logicielle du trajet est certifiée par une chaine de blocs car chacun des segments qui la constitue est lui-même certifié par ladite chaine de blocs. Celle-ci est une base de données certifiée et inaltérable, disposant d'un haut niveau de sécurité et fonctionnant sans organe centrale de contrôle, mais disposant d'un contrôle réparti sur plusieurs serveurs se contrôlant continuellement et mutuellement en respect de la fonction propre de la chaine de blocs, ce qui rend impossible toute falsification. En effet, tout ajout de segment fait l'objet d'un contrôle cryptographique de transaction vérifié par l'ensemble de ces serveurs. Ainsi tout trajet est un historique, (éventuellement hiérarchisé) d'addition de segments élémentaires fait l'objet d'un contrôle permanent de validité d'existence.

Chaque véhicule intègre un ordinateur de bord (2) connecté avec un système informatique centralisée (7), toutes les communications (8), entre l'ordinateur de bord et le système informatique centralisé sont chiffrées et sécurisées.

Néanmoins, en cas de nécessité, le véhicule peut être conduit à distance par un opérateur éloigné grâce à un dispositif de type simulateur de conduite disposant de l'ensemble des commandes d'un véhicule et via les images transmises par les caméras (17) intégrées sur véhicule. Les échanges entre l'opérateur et le véhicule pour la prise en main par un opérateur s'effectuent par la communication chiffrée (8) entre le système informatique centralisé (7) et l'ordinateur de bord (2). Ladite communication peut également s'effectuer par une liaison 5 G (acronyme de cinquième génération) chiffrée.

Le système informatique et l'ordinateur de bord, associé à l'IA, mémorise, la cartographie de l'ensemble du réseau de bandes colorées (10), le code de la route, la reconnaissance des feux tricolores et de leur position, l'ensemble des panneaux de signalisation. L'IA interprète tout type de situation et réagit en conséquence en privilégiant toujours la sécurité. Le véhicule va adapter automatiquement sa vitesse et son déplacement au regard des panneaux routiers, des zones de limitation de vitesses et zones de danger potentiel, mémorisées dans la mémoire de l'ordinateur de bord (2) (écoles, passage à niveau...) ou encore des instructions reçues en temps réel du système informatique centralisé (7) via la communication chiffrée (8).

Chaque puce RFID (9), ou transpondeur est intégré par carottage sur la bande colorée (10), fixée sur la chaussée et mémorise un code d'identification unique (11). A chaque code unique (11) de chaque puce RFID est associé les coordonnées (x,y,z), de ladite puce RFID, lesdites coordonnées sont mémorisées dans l'ordinateur de bord de tous les véhicules (6). Ainsi, à tout moment la position du véhicule est définie grâce aux coordonnées de chaque puce RFID (9), franchie par le véhicule. Entre deux puces RFID, la position de véhicule est affinée et définie à quelques centimètres près par odométrie (distance parcourue par le nombre de tours de roue effectuée par le véhicule).

Chaque véhicule comprend des moyens de repérage et de suivi de la bande colorée grâce à au moins une caméra (12), dont l'image est traitée par l'ordinateur de bord et va agir sur un dispositif d'asservissement de la direction connecté avec une unité de commande (3), afin d'assurer un suivi précis de la bande colorée (10).

L'unité de commande (3), va agir sur instruction de l'ordinateur de bord (2), afin d'assurer toutes les commandes permettant la circulation du véhicule, actionnement de la direction, du freinage, des accélérations, du ralentissement, de l'avertisseur sonore, des clignotants, du changement de voies, du déclenchement des feux de détresse etc...

Ladite bande colorée (10) peut être composée d'un polymère thermocollé sur la chaussée et colorée dans la masse et ou une simple bande de peinture de faible coût. Cette dernière possibilité permet d'équiper très rapidement, l'ensemble des rues d'une agglomération ainsi que les routes et chemins connexes. Ladite bande (10) peut-être continue ou discontinue en fonction de la zone concernée.

Ladite bande colorée incorpore des puces RFID (9) ou transpondeurs, chaque véhicule (6) comprend des moyens de lecture desdites puces RFID. Chaque fois que l'ordinateur de bord (2) constate une dérive par rapport à la localisation précise fournie par une puce RFID (9) intégrée sur la bande colorée (10), une correction est apportée à la trajectoire grâce à l'action de la direction via de l'unité de commande (3), et la centrale inertielle (1) est recalée sur les coordonnées précises fournie par la puce RFID.

Les dites coordonnées (x,y,z),mémorisées dans les puces RFID sont adaptables à tous les référentiels géodésiques.

La bande colorée (10) a une coloration spécifique constante, préférentiellement bleue, afin de se différencier des bandes de signalisation routière classiques tout en s'intégrant bien dans le paysage urbain.

Chaque véhicule est pourvu des moyens de détection des puces RFID (9) intégrées dans la bande colorée. Pour cela chaque véhicule est pourvu d'une antenne adaptée (13), permettant de lire le code unique (11), mémorisé dans ladite puce RFID (9). Pour cela, un signal radiofréquence adapté est émis par l'antenne (13) vers les puces RFID ou transpondeur, afin de recevoir en retour le code d'identification unique (11) de chaque puce RFID intégrée sur la bande colorée (10), parcourue par le véhicule.

Chaque véhicule est pourvu de plusieurs caméras (17), situées en plusieurs points stratégiques du véhicule et notamment aux 4 points haut de l'habitacle, afin de pouvoir couvrir un champ de 360 degrés, permettant à l'ordinateur de bord (2), d'avoir une vision permanente de l'environnement du véhicule et d'être en mesure d'enregistrer une vidéo de tout déplacement à des fins de contrôle et de sécurité notamment en cas d'incidents ou d'accidents. Bien entendu lesdits enregistrements sont périodiquement effacés, et ne sont exploités qu'en cas de besoin.

Chaque véhicule est pourvu d'un ensemble de capteurs, de plusieurs types :
- Infrarouges (14), pour déterminer, une présence humaine à proximité, piéton, bicyclette. Ces capteurs sont situés sur plusieurs points autour du véhicule.
- Ultrasons (15), pour déterminer si un autre véhicule se rapproche, ou ne respecte pas la distance de sécurité pouvant alors déclencher un signal tel que le feu de détresse, via l'ordinateur de bord (2), connecté au capteur et l'unité de commande (3). Ces capteurs sont situés au moins sur les quatre côtés du véhicule : avant, arrière et les deux cotés latéraux.
- Radar (16), (hyperfréquence). Ces capteurs ont une portée de plusieurs centaines de mètres en vision directe. Ils permettent de déterminer par l'écho d'un véhicule, sa direction et sa vitesse afin d'anticiper une action adaptée déterminée par l'IA. Ces capteurs sont essentiellement orientés vers l'avant du véhicule.

Pour résumer l'invention consiste essentiellement en un système de transport collectif privatif automatique, géré par un système informatique centralisé (7) comprenant une pluralité de véhicules (6), des moyens de rechargements desdits véhicules, chaque véhicules (6) est pourvus d'un ordinateur de bord (2) mémorisant des logiciels ad hoc, et des moyens de communications, notamment pour communiquer avec le système informatique centralisé (7), chaque véhicule est pourvu d'un ensemble de capteurs de sécurité. Pour se déplacer, le véhicule (6) va suivre une bande colorée (10), par optoguidage, jusqu'à sa destination, ladite bande colorée incorpore des puces RFID (9) ou transpondeurs, chaque véhicule comprend des moyens de lecture desdites puces RFID, caractérisé en ce qu'une centrale inertielle (1), est capable de gérer l'ensemble des paramètres liés aux déplacements d'un véhicule, à savoir : un point de départ, une direction, des accélérations, des durées, ainsi que les variations successives de ces différents paramètres, le traitement des données précitées permet à la centrale inertielle (1), assistée par un ordinateur de bord (2), de calculer et de définir une succession de points du trajet du véhicule, dont la concaténation des segments consécutifs définis par les points successifs du trajet identifiés par la centrale inertielle (1), va définir une image virtuelle informatique (20) de la bande colorée (10) dudit trajet parcouru, l'ordinateur de bord (2) va mémoriser lesdites images virtuelles informatiques (20), de sorte que dans le cas où la bande colorée (10) n'est plus visible, l'ordinateur de bord (2) utilise la bande virtuelle informatique (20) pour poursuivre normalement le trajet programmé.

Afin que le système de véhicule autonome soit optimisé, ledit système dispose d'un ensemble de bornes (19) de rechargement automatique, et de transfert de données. Lesdites bornes sont réparties judicieusement sur le territoire.

Lorsque le véhicule (6) recharge sa batterie (38) à une borne de rechargement (19), l'ensemble des données des trajets effectués par chaque véhicule, reproduisant les images virtuelles informatiques (20) de la bandes colorée (10) des trajets parcourus, est transmis au système informatique centralisé (7), puis à son tour le système informatique centralisé (7), retransmet l'ensemble desdites données correspondantes aux trajets de chaque véhicule, à tous les véhicules (6) du parc, via la borne de rechargement (19), ainsi tous les véhicules vont recevoir et mémoriser les images virtuelles informatiques (20) de la bande colorée (10) de tous les trajets effectués par tous les véhicules.

Le dispositif de rechargement est constitué de bornes (19) fixées au sol. Elle comprend une électronique capable de communiquer avec le véhicule à proximité, de gérer le rechargement des batteries du véhicule, ainsi que le transfert des données du parcours défini par l'ordinateur (2).

Grace à l'optoguidage, et à une cale de roue (39), le véhicule (6) est capable de se positionner exactement devant la borne (19) avec une marge d'erreur, inférieure à 10 millimètres.

L'ordinateur de bord (2) du véhicule échange avec l'électronique de la borne (19) pour déclencher l'accouplement mécanique entre la borne (19) et le véhicule (6).

Dans un premier temps un dispositif mécanique libère l'accès à la fiche femelle (25), en déplaçant le volet de protection (21). Le dispositif d'accouplement est constitué essentiellement d'une fiche mâle (22), d'un dispositif de guidage (23), d'un bras mobile semi rigide (24), coulissant dans un tube cylindrique de guidage et des moyens d'actionnement du dispositif pour connecter la fiche mâle (22) mobile avec la fiche femelle fixe (25) située au fond d'un guide femelle (26).

Le dispositif d'actionnement du bras mobile semi rigide (24) est constitué d'un moteur électrique (27) dont l'axe est équipe d'une poulie (28). Ladite poulie entraine un écrou (29) via une courroie coopérant avec une deuxième poulie solidaire de l'écrou. La rotation du moteur (27) provoque la rotation de l'écrou (29), ladite rotation de l'écrou provoque une translation de la vis (34) qui est solidaire du bras connecteur semi rigide (24), ledit bras est ainsi entrainé vers le guide femelle (26).

Le guide mâle est constitué d'une partie cylindrique (30) sur laquelle sont fixés trois guides en forme de demi cône (31) sur la partie avant, devenant des demi cylindres (32) sur la partie arrière. Ainsi, le guide mâle coopère avec le guide femelle correspondante (26), pourvus des gorges ad hoc accueillant les guides en forme de demi cône (31), devenant des demi cylindres (32) vu plus haut.

Le bras (24) est constitué d'un matériau de type polymère ou composite semi rigide, capable d'une certaine flexibilité afin de permettre une tolérance d'erreur de positionnement entre véhicule (6) et la borne (19) de quelques millimètres pour permettre un accouplement parfait entre la fiche mâle (22) et la fiche femelle (25), grâce à la coopération du guide mâle (30), et guides associés (31), (32), avec le guide femelle (26). Le bras semi rigide (24) comprend dans la partie centrale un évidemment (36) qui reçoit une gaine (37), contenant des fils conducteurs. Les fils conducteurs permettent de transporter des courants forts pour le rechargement de la batterie et des courants faibles pour les échanges de données.

Aussitôt après la connexion, dans un premier temps, seules les données, essentiellement liées aux parcours, soient les images des bandes virtuelles informatique (20), sont échangées entre l'ordinateur de bord (2) et le système informatique centralisé (7). Les échanges de données entre la borne (19) et l'ordinateur (2) du véhicule s'effectuent par contacts. Ensuite lesdites données reçues par la borne sont mémorisées dans une mémoire dédiée de ladite borne puis transmises vers le système informatique centralisé (7). Pour des raisons de sécurité, une connexion filaire est privilégiée ou encore par fibre optique pour des hauts débits. Une connexion de type 5 G chiffrée pourrait également être envisagée avec un niveau de sécurité inférieur.

Dans un deuxième temps, après les échanges de données vues plus haut, les courants forts destinés à la recharge des batteries (38) sont actionnés.

Le véhicule (6) est pourvu d'une deuxième prise de recharge classique afin de pouvoir être rechargé à une borne de recharge classique en cas de besoin mais n'est pas en mesure de transférer les données des trajets vers l'ordinateur centrale.

### Motorisation :

Typiquement un moteur roue électrique sera installé sur chacune des roues arrière de 10 à 15 KW chacun, au regard des vitesses modérées en mode automatique en ville de l'ordre de 35 à 45 Km/h. Une vitesse supérieure de l'ordre de 70Km/h sera permise sur les voies rapides lorsqu'il n'y a pas d'intersection. La puissance utile pour un véhicule électrique évolue environ comme le cube de sa vitesse. La résistance au roulement est linéaire et la résistance aérodynamique évolue avec le carré de la vitesse, ce qui implique que la capacité en KW/H des batteries embarquées soit réduites d'un facteur d'environ trois, soit de l'ordre 20 KW/H en comparaison d'un véhicule 100% électrique pour une autonomie de l'ordre de 200 Km. A ce jour, le prix des batteries d'un véhicule électrique, représente environ un tiers du coût total du véhicule.

Un moteur thermique sera placé à l'avant permettant avec une traction motrice avant. Il sera choisi un moteur de puissance suffisante de 90 à 100 CV, capable de rouler en vitesse de croisière à la vitesse maximum autorisée (130 KM /H généralement) sur les autoroutes et il sera également agile sur les routes de montagnes, avec néanmoins un faible niveau de rejet de carbonés pour le respect de l'environnement.

Le véhicule est conçu pour un usage partagé, afin de minorer le nombre de véhicules en circulation et réduire les encombrements et la pollution. Lorsqu'un utilisateur réserve un véhicule à l'aide de son ordiphone, en indiquant son point de départ et son point d'arriver, l'ordinateur (2) communique avec le système informatique centralisé (7), et recherche un autre utilisateur dont le trajet est compatible. Si cela est le cas, le véhicule s'arrête sur le trajet pour embarquer le second passager.

Le véhicule est confortable et attractif, il est conçu pour recevoir quatre ou cinq personnes avec un coffre à bagages spacieux permettant de partir en vacances en famille en mode conduite manuelle.

Ledit moteur thermique sera compatible avec l'éthanol, dont le coût est environ deux fois inférieur à celui de l'essence. L'éthanol est composé à 85 % de carburant non fossile, il est plus respectueux de l'environnement. L'utilisation en mode thermique permet la recharge des batteries. En en mode électrique, la décélération ou le freinage permet de récupérer l'énergie cinétique pour la recharge des batteries. Une première estimation statistique montre que plus de 90% des trajets parcourus se feront en mode électrique, donc silencieux et propre. L'invention est conçue pour évoluer vers le probable carburant du futur que représente l'hydrogène, offrant alors un véhicule 100% propre.

Une caractéristique importante de l'invention est que les véhicules sont conçus pour évoluer selon un mode de train virtuel (35), pour ce faire les véhicules communiquent entre eux selon des vecteurs de liaisons sécurisés (33), à savoir une liaison hyper fréquence numérique combinée avec une liaison infrarouge lorsque les véhicules sont à courte distance.

Lorsque les véhicules s'organisent en train virtuel en suivant la bande colorée (10) ou la bande virtuelle informatique correspondante (20), le véhicule de tête devient le véhicule maître et mémorise dans son ordinateur de bord (2), l'ensemble des destinations de chaque véhicule et va orchestrer via la liaison sécurisée (33), les accélérations, les freinages, le contournement d'obstacle, et notamment le changement de direction d'un ou de plusieurs véhicules d'un train, en ordonnant au véhicule qui suit immédiatement le ou les véhicules qui changent de direction, de ralentir afin de permettre sans danger au(x) véhicule(s) de changer de voie pour rejoindre une autre bande colorée (10) ou la bande virtuelle informatique (20) correspondante. Selon les aspects normatifs, l'invention a l'avantage de pouvoir être assimilée à un tram modulaire car la bande colorée remplit la fonction de rail.

L'invention peut également réaliser un moyen de transport interurbain, grâce à la combinaison de la centrale inertielle (1), de la bande colorée (10), et des puces RFID (9).

Pour ce faire, hors agglomération, sur de longs trajets, les puces RFID (9) sont bien plus espacées de 100 à 1000 m. Lesdites puces RFID (9) sont alors intégrées sur des portions de bandes colorées (10), courtes mais bien visibles, par exemple de trois mètres de longueur tous les 100, 500 ou 1000 mètres selon la configuration de la route (croisements, changement de route, rond points).

Pour obtenir une image virtuelle informatique du trajet un conducteur habilité va parcourir en mode conduite manuelle, un véhicule (6), les trajets décrits plus haut une seule fois, sur la partie de la route où aurait été placée la bande colorée, en observant une grande attention, chaque fois qu'il voit une portion de bande colorée, il va rouler précisément sur ladite portion de bande colorée (10) afin que les coordonnées (x,y,z) déduites de l'identifiant (11) de la puce RFID (9) franchie par le véhicule (6), recale avec précision la centrale inertielle. Ainsi la centrale inertielle (1) reconstitue la bande virtuelle informatique (20) de chaque trajet parcouru. Il faut noter que la dérive d'une centrale inertielle (1), de base, permettant une précision de 16 bits, est faible, et représente quelques centimètres sur un trajet de 1000 mètres qui dure généralement entre une à deux minutes.

Ainsi, un conducteur habilité, en roulant avec un véhicule (6) une seule fois avec précision sur une bande colorée (10) discontinue, dont les portions de bande colorée (10), sont espacées, et chacune desdites portions de bande colorée intègre une puce RFID (9), la centrale inertielle (1), va reconstituer une bande colorée virtuelle continue (20) du trajet effectué et va se recaler la centrale inertielle sur les coordonnées (x,y,z) de toute puce RFID (9) franchi par le véhicule.

Pour le bon fonctionnement du système, lorsque des travaux sont mis en œuvre dans l'agglomération qui est équipée de l'invention, le gestionnaire de l'agglomération concernée, communique au système informatique centralisé (7) les éléments de nature à impacter le fonctionnement de l'invention, lequel système informatique (7), communique lesdits éléments des travaux à l'ordinateur de bord (2) de chaque véhicule, lequel va prendre en considération l'information reçu.

La numérisation des bandes colorées peut être effectué par tout type de véhicules ou de robots pourvus d'une centrale inertielle (1) et des moyens de calcul adaptés, et rentre dans le cadre de la présente invention.

La mise en place d'un réseau de géopositionnent fin, bien plus précis que le GPS (Global Positioning System), susceptible d'être utilisé par tout type et d'opérateur ou d'application, notamment dans le domaine du transport, navette autonome, ou tout type de véhicule. En effet, un opérateur habilité, disposant d'une antenne RFID (13) capables de lire l'identifiant unique (11) des puces RFID (13), et coopérant avec un ordinateur qui mémorise la correspondance entre le codes uniques (11) de chaque puce et ses coordonnées (x,y,z), permet à l'opérateur de disposer d'un réseau fin et fiable de géopositionnent.

Toutes les variantes de l'invention, relatives aux formes, couleurs, matériaux, dispositions, sous-ensembles, et éléments fonctionnels, restent dans le cadre de l'invention.

### Conclusion :

L'invention décrite dans de présent document est de nature à générer un nouveau paradigme dans le monde de la mobilité. Cette innovation réunit de nombreux atouts :
- La grande simplicité de l'invention, donc sa fiabilité par rapport au véhicule 100% automne, (attendu depuis plus de 12 ans) qui doit trouver son chenin à chaque instant alors que dans la présente invention le véhicule suit une bande colorée au sol par optoguidage ou la bande virtuelle informatique.
- L'innovation permet de réduire drastiquement les problèmes des encombrements, du stationnement et de la pollution en ville.
- Une étude réalisée par un industriel du monde des transport et un gestionnaire de flotte, montre que chaque véhicule objet de l'invention mis en place dans une ville, permet à terme de supprimer huit véhicules personnels, ce qui a pour conséquence, d'accroitre très significativement la fluidité de la circulation.
- La présente invention résiste efficacement au piratage car elle ne dépend pas du système informatique centralisé. Une fois identifié, le point de départ et le point d'arrivée, le véhicule trouve son chemin seul grâce à l'électronique embarquée.
- L'invention ne dépend de système de positionnement satellitaire, aussi, le véhicule se déplace aussi bien sous des tunnels ou en sous-sol qu'en plein air.
- La ligne colorée au sol indique clairement le lieu de passage des véhicules pour une sécurité accrue alors qu'un véhicule autonome peut surgir de toute part. De plus, il sera possible de verbaliser les véhicules stationnant sur la bande afin d'éviter tout blocage de la circulation.
- L'acceptabilité de l'invention est très supérieure à celle du véhiculé 100% autonome : 76 % contre 14%. Soit un rapport supérieur à cinq.
- L'innovation doit rentrer dans la norme du tram, (car le véhicule suit un rail), ce qui facilitera grandement la couverture par une assurance.
- Le faible cout pour l'usager permet d'attirer une part significative de de la population qui utilise leur véhicule personnel dans les villes et agglomérations.
- Un faible cout d'installation et de fonctionnement de l'invention permet une rentabilité attractive pour les acteurs, et la nation, ce qui va entrainer un fort déploiement dans de nombreux territoires, assurant la pérennité de l'invention.
- L'innovation permet de pouvoir conserver le plaisir de conduire hors des villes, pour les personnes qui le souhaitent,
- Enfin l'invention va offrir une nouvelle qualité de vie, et une forte dynamisation de l'activité économique et des loisirs dans la cité, et ce dans le respect de la planète.

## Revendications

1. Système de transport collectif privatif automatique comprenant une pluralité de véhicules (6), des moyens de rechargements (19) desdits véhicules, chaque véhicule (6) est pourvu d'un ordinateur de bord (2) et des moyens de communications (8), notamment pour communiquer avec un système informatique (7), chaque véhicule (6) est pourvu d'un ensemble de capteurs de sécurité, le véhicule (6) est configuré pour suivre une bande colorée (10) par optoguidage, ladite bande colorée incorpore des puces de type RFID (9) ou transpondeurs, chaque véhicule comprend des moyens de lecture (13) desdites puces RFID,
**caractérisé, en ce que**, lorsqu'un véhicule (6) suit la bande colorée (10) par optoguidage, une centrale inertielle (1), équipée d'un accéléromètre trois axes (4), d'un gyroscope trois axes (5), et d'une boussole, est capable avec le concours de l'ordinateur (2) et des logiciels ad hoc, de traiter les paramètres des déplacements du véhicule (6), à savoir : un point de départ, une vitesse initiale, une direction, des accélérations, des durées et toutes les variations successives desdits paramètres; le traitement des données précitées, permet à la centrale inertielle (1) assistée par l'ordinateur de bord (2), de calculer et de définir une succession de points du trajet du véhicule ; la concaténation des segments définis par les points consécutifs du trajet identifié par la centrale inertielle (1), définit une bande virtuelle informatique (20) de la bande colorée (10), soit une numérisation du trajet parcouru, dont les données sont mémorisées dans une mémoire (41), de l'ordinateur de bord (2), permettant au véhicule (6) de poursuivre le trajet programmé en suivant la bande virtuelle informatique (20) mémorisée dans la mémoire (41) de l'ordinateur de bord (2), dans le cas où la bande colorée (10) n'est plus visible.

2. Système de transport collectif privatif automatique selon la revendication 1, **caractérisé en ce que** les moyens de rechargement (19) sont constitués de bornes (19) capables de communiquer avec le véhicule (6) grâce à des moyens d'échange de données entre la borne (19) et l'ordinateur de bord (2) afin de transmettre l'ensemble des données des trajets effectués par le véhicule, reproduisant les images virtuelles informatiques (20) de la bandes colorée (10) des trajets parcourus, au système informatique (7), et afin de recevoir l'ensemble des données correspondantes aux trajets de chaque véhicule, lorsque le véhicule (6) recharge sa batterie (38) à une borne de rechargement (19).

3. Système de transport collectif privatif automatique selon la revendication 1, **caractérisé en ce que** la fréquence d'identification par la centrale inertielle (1) des points du trajet est fonction de la vitesse du véhicule, afin que la distance entre deux points consécutifs d'un quelconque segment du trajet soit de même longueur.

4. Système de transport collectif privatif automatique selon la revendication 1, **caractérisé, en ce que** la bande virtuelle (20), résultant de la concaténation des segments du trajet, est certifiée par une chaîne de bloc, car chaque segment qui la constitue est lui-même certifié par ladite chaine de blocs, ladite chaine de blocs étant une base de données certifiée et inaltérable fonctionnant sans unité centrale de contrôle mais disposant d'un contrôle réparti sur plusieurs serveurs se contrôlant continuellement et mutuellement rendant impossible toute falsification.

5. Système de transport collectif privatif automatique selon l'une quelconque des revendications précédentes, **caractérisé en ce que** chaque fois que l'ordinateur de bord (2) du véhicule (6) constate une dérive par rapport à la localisation précise fournie par une puce RFID (9) intégrée sur la bande colorée (10), une correction est apportée à la trajectoire grâce à l'action sur l'organe de direction (40) via l'unité de commande (3) ; et la centrale inertielle (1) est recalée sur les coordonnées précises fournie par la puce RFID.

6. Système de transport collectif privatif automatique selon la revendication 1, **caractérisé en ce qu'**un code identifiant unique (11) est mémorisé dans une mémoire de chaque puce RFID (9), à chaque code identifiant unique de chaque puce RFID correspond les coordonnées (x, y, z) précises de ladite puce RFID, les coordonnées (x, y, z) de toutes les puces RFID, sont mémorisées dans l'ordinateur de bord (2) des véhicule (6).

7. Système de transport collectif privatif automatique selon l'une quelconque des revendications précédente, **caractérisé en ce qu'**un train de véhicules (35) est capable de suivre un véhicule de tête (36) en suivant la bande colorée (10) ou la bande virtuelle informatique correspondante (20), le véhicule de tête (36) étant capable de mémoriser dans son ordinateur de bord (2), l'ensemble des destinations de chaque véhicule, via une liaison sécurisée (33) et de coordonner les accélérations, les freinages, le contournement d'obstacles, et le changement de direction d'un ou de plusieurs véhicules du train, et le ralentissement du véhicule ou des véhicules qui suivent immédiatement le ou les véhicules qui changent de direction, afin de permettre au(x) véhicule(s) de changer de voie pour rejoindre une autre bande colorée (10) ou la bande virtuelle informatique (20) correspondante.

8. Système de transport collectif privatif automatique selon l'une quelconque des revendications précédentes, **caractérisé en ce que**, hors des agglomérations, les puces RFID (9) sont espacées de 100 à 1000 mètres et fixées sur des bandes discontinues colorées (10), courtes mais bien visibles, de 3 mètres par exemple, les coordonnées (x, y, z) de toutes les puces RFID étant mémorisées dans l'ordinateur de bord (2) de tout véhicule (6), de sorte qu'un véhicule en roulant sur ladite ligne discontinue colorée (10), avec le concours de l'ordinateur (2) est capable de recaler la centrale inertielle sur les coordonnées (x, y, z) de toute puce franchie par le véhicule.

9. Système de transport collectif privatif automatique selon la revendication 1, **caractérisé en ce que** l'ordinateur de bord (2), ainsi que le système informatique (7) sont pourvus d'un système expert associé à des logiciels et des algorithmes d'intelligence augmentée IA, qui permettent de mémoriser l'ensemble des informations liées aux trajets et à l'ensemble des situations possibles afin d'intégrer l'expérience acquise au cours de l'usage, ce qui permet à l'IA, de prendre la même décision que l'homme éclairé.

10. Système de transport collectif privatif automatique selon la revendication 9, **caractérisé en ce qu'**il y a plusieurs centrales inertielles, la cohérence des données fournies par chacune desdites centrales inertielles (1) est contrôlée par l'ordinateur de bord (2), en combinaison avec l'IA, ledit ordinateur de bord mémorisant des algorithmes de la théorie de la décision, afin que l'IA prenne la meilleure décision dans toutes les situations envisageables.

11. Système de transport collectif privatif automatique selon la revendication 2, **caractérisé en ce que**, lors du rechargement du véhicule (6) à une borne de rechargement spécifique (19), l'optoguidage et une cale de roue (39) permettent audit véhicule se positionner avec précision devant la borne (19), le dispositif d'accouplement est constitué essentiellement d'une fiche mâle (22), d'un dispositif de guidage (23), d'un bras mobile semi rigide (24), le dispositif d'actionnement du bras (24) est constitué d'un moteur électrique (27) dont l'axe est équipé d'une poulie (28), ladite poulie entraine un écrou (29) via une courroie coopérant avec une deuxième poulie solidaire de l'écrou, la rotation du moteur (27) provoque la rotation de l'écrou (29), ladite rotation de l'écrou provoque une translation d'une vis (34) qui est solidaire du bras (24), ledit bras est entraîné vers le guide femelle (26), le guide mâle comprend une partie cylindrique (30) sur laquelle sont fixés au moins 3 guides (31) et (32), le guide mâle coopère avec le guide femelle correspondant (26), pourvu des gorges ad hoc accueillant les guides (31), et (32), une fois les fiches (22) et (25) connectées, les données des trajets sont transmises dans un premier temps vers l'ordinateur central (7) via une liaison filaire ou par fibre optique, puis le rechargement des batteries (38) s'effectue.

12. Système de transport collectif privatif automatique selon les revendications 1 et 6, **caractérisé en ce que** la mise en place d'un réseau de géo positionnement fin est utilisé par tout type d'opérateur ou d'application habilité disposant d'une antenne RFID (13) coopérant avec un ordinateur capable de lire tout identifiant unique (11) des puces RFID (13), et d'en déterminer ses coordonnées (x, y, z).

13. Système de transport collectif privatif automatique selon la revendication 1, **caractérisé en ce que**, en cas de non visibilité de la bande colorée (10), pour des raisons atmosphériques, neige, verglas, sable, ou pour tout autre raison, la centrale inertielle (1) en combinaison avec l'ordinateur (2) pourvu d'une unité de calcul dédiée (18), et des servomoteur adaptés, connectés à une unité de commande (3), agissant sur l'unité de direction (40), permet au véhicule de poursuivre le trajet programmé, en suivant la bande virtuelle informatique (20), mémorisée dans la mémoire (41) de l'ordinateur (2).

14. Système de transport collectif privatif automatique selon l'une quelconque des revendications précédentes, **caractérisé en ce que** ledit système est bi-mode, car il dispose de deux modes de fonctionnement: électrique et automatique en ville, ou thermique et à conduite manuelle hors de la ville; en mode conduite manuelle, les sièges avant pivotent d'un demi-tour, lesdits sièges avant sont conçus pour assurer cette fonction de rotation.

## Patentansprüche

1. Automatisches privates öffentliches Transportsystem, umfassend eine Vielzahl von Fahrzeugen (6), Mittel zum Aufladen (19) der Fahrzeuge, wobei jedes Fahrzeug (6) mit einem Bordrechner (2) und Kommunikationsmitteln (8), insbesondere zum Kommunizieren mit einem Computersystem (7), versehen ist, wobei jedes Fahrzeug (6) mit einem Satz von Sicherheitssensoren versehen ist, wobei das Fahrzeug (6) zum Folgen eines farbigen Streifens (10) durch optische Führung konfiguriert ist, wobei der farbige Streifen RFID- oder transponderartige Chips (9) enthält, wobei jedes Fahrzeug Mittel zum Lesen (13) der RFID-Chips umfasst, **dadurch gekennzeichnet, dass** wenn ein Fahrzeug (6) dem farbigen Streifen (10) durch optische Führung folgt, ein Trägheitsnavigationssystem (1), das mit einem dreiachsigen Beschleunigungsmesser (4), einem dreiachsigen Gyroskop (5) und einem Kompass ausgerüstet ist, in der Lage ist, unter der Mitwirkung des Rechners (2) und von zu diesem Zweck passender Software die Parameter von Bewegungen des Fahrzeugs (6) zu verarbeiten, nämlich: einen Startpunkt, eine Anfangsgeschwindigkeit, eine Richtung, Beschleunigungen, Dauern und alle nachfolgenden Variationen der Parameter; die Verarbeitung der oben genannten Daten es dem Trägheitsnavigationssystem (1) ermöglicht, unterstützt durch den Bordrechner (2) eine Folge von Punkten der Fahrstrecke des Fahrzeugs zu berechnen und zu definieren; die Aneinanderreihung der Segmente, die durch die aufeinanderfolgenden Punkte der Fahrstrecke definiert werden, die durch das Trägheitsnavigationssystem (1) identifiziert wird, einen virtuellen Computerstreifen (20) des farbigen Streifens (10) oder eine Digitalisierung der zurückgelegten Fahrstrecke definiert, deren Daten in einem Speicher (41) des Bordrechners (2) gespeichert sind, wobei es dem Fahrzeug (6) ermöglicht wird, die programmierte Fahrstrecke weiter zu verfolgen, wobei es dem virtuellen Computerstreifen (20) folgt, der in dem Speicher (41) des Bordrechners (2) gespeichert ist, falls der farbige Streifen (10) nicht mehr sichtbar ist.

2. Automatisches privates öffentliches Transportsystem nach Anspruch 1, **dadurch gekennzeichnet, dass** die Auflademittel (19) aus Anschlüssen (19) bestehen, die in der Lage sind, mit dem Fahrzeug (6) mit Hilfe von Datenaustauschmitteln zwischen dem Anschluss (19) und dem Bordrechner (2) zu kommunizieren, um den Satz von Daten der Fahrstrecken, die durch das Fahrzeug ausgeführt werden, die die virtuellen Computerbilder (20) der farbigen Streifen (10) der ausgeführten Fahrten wiedergeben, an das Computersystem (7) zu übertragen und um den Satz von Daten, die den Fahrten jedes Fahrzeugs entsprechen, zu empfangen, wenn das Fahrzeug (6) seine Batterie (38) an einem Aufladeanschluss (19) auflädt.

3. Automatisches privates öffentliches Transportsystem nach Anspruch 1, **dadurch gekennzeichnet, dass** die Häufigkeit einer Identifizierung der Punkte der Fahrstrecke durch das Trägheitsnavigationssystem (1) von der Fahrzeuggeschwindigkeit abhängt, sodass die Entfernung zwischen zwei aufeinanderfolgenden Punkten eines beliebigen Fahrstreckensegments gleich groß ist.

4. Automatisches privates öffentliches Transportsystem nach Anspruch 1, **dadurch gekennzeichnet, dass** der virtuelle Streifen (20), der sich aus der Aneinanderreihung der Fahrstreckensegmente ergibt, durch eine Blockchain zertifiziert wird, da jedes Segment, aus dem sie besteht, selbst durch die Blockchain zertifiziert wird, wobei die Blockchain eine zertifizierte und unveränderliche Datenbank ist, die ohne zentrale Steuereinheit funktioniert, aber über eine Steuerung verfügt, die auf mehrere Server verteilt ist, die sich kontinuierlich und gegenseitig steuern, sodass jede Fälschung verunmöglicht wird.

5. Automatisches privates öffentliches Transportsystem nach einem der vorstehenden Ansprüche, **dadurch gekennzeichnet, dass** jedes Mal, wenn der Bordrechner (2) des Fahrzeugs (6) eine Abweichung von dem genauen Standort feststellt, der durch einen RFID-Chip (9) bereitgestellt wird, der auf dem farbigen Streifen (10) integriert ist, eine Korrektur der Bahn mit Hilfe der Einwirkung auf das Richtungselement (40) über die Bedieneinheit (3) vorgenommen wird; und das Trägheitsnavigationssystem (1) auf die genauen Koordinaten korrigiert wird, die durch den RFID-Chip bereitgestellt werden.

6. Automatisches privates öffentliches Transportsystem nach Anspruch 1, **dadurch gekennzeichnet, dass** ein eindeutiger Identifikationscode (11) in einem Speicher jedes RFID-Chips (9) gespeichert ist, jedem eindeutigen Identifikationscode jedes RFID-Chips die genauen Koordinaten (x, y, z) des RFID-Chips entsprechen, die Koordinaten (x, y, z) aller RFID-Chips in dem Bordrechner (2) des Fahrzeugs (6) gespeichert sind.

7. Automatisches privates öffentliches Transportsystem nach einem der vorstehenden Ansprüche, **dadurch gekennzeichnet, dass** ein Fahrzeugzug (35) in der Lage ist, einem ersten Fahrzeug (36) zu folgen, wobei es dem farbigen Streifen (10) oder dem entsprechenden virtuellen Computerstreifen (20) folgt, wobei das erste Fahrzeug (36) in der Lage ist, in seinem Bordrechner (2) über eine sichere Verbindung (33) den Satz von Zielen jedes Fahrzeugs zu speichern und die Beschleunigungen, Bremsungen, Hindernisvermeidung und Richtungsänderung eines oder mehrerer Fahrzeuge des Zuges und die Verlangsamung des oder der Fahrzeuge zu koordinieren, die dem oder den Fahrzeugen unmittelbar folgen, die die Richtung ändern, um es dem/den Fahrzeug(en) zu ermöglichen, zum Zurückgelangen auf einen anderen farbigen Streifen (10) oder den entsprechenden virtuellen Computerstreifen (20) die Spur zu wechseln.

8. Automatisches privates öffentliches Transportsystem nach einem der vorstehenden Ansprüche, **dadurch gekennzeichnet, dass** außerhalb geschlossener Ortschaften die RFID-Chips (9) um 100 bis 1000 Meter beabstandet und auf kurzen, aber gut sichtbaren, farbigen, unterbrochenen Streifen (10) von beispielsweise 3 Metern Länge befestigt sind, wobei die Koordinaten (x, y, z) aller RFID-Chips in dem Bordrechner (2) jedes Fahrzeugs (6) gespeichert sind, sodass ein Fahrzeug, das auf der farbigen unterbrochenen Linie (10) fährt, unter der Mitwirkung des Rechners (2) in der Lage ist, das Trägheitsnavigationssystem auf die Koordinaten (x, y, z) jedes Chips zu korrigieren, der durch das Fahrzeug passiert wird.

9. Automatisches privates öffentliches Transportsystem nach Anspruch 1, **dadurch gekennzeichnet, dass** der Bordrechner (2) sowie das Computersystem (7) mit einem Expertensystem versehen sind, das mit Software und Algorithmen der künstlichen Intelligenz KI verknüpft ist, die es ermöglichen, den Satz von Informationen, die mit den Fahrstrecken verbunden sind, und den Satz von möglichen Situationen zu speichern, um die Erfahrung zu integrieren, die während der Nutzung gesammelt werden, was es der KI ermöglicht, dieselbe Entscheidung wie ein informierter Mensch zu treffen.

10. Automatisches privates öffentliches Transportsystem nach Anspruch 9, **dadurch gekennzeichnet, dass** es mehrere Trägheitsnavigationssysteme gibt, die Konsistenz der Daten, die durch jede der Trägheitsnavigationssystemen (1) bereitgestellt werden, durch den Bordrechner (2) in Kombination mit der KI gesteuert wird, der Bordrechner Algorithmen der Entscheidungstheorie speichert, sodass die KI in allen vorstellbaren Situationen die beste Entscheidung trifft.

11. Automatisches privates öffentliches Transportsystem nach Anspruch 2, **dadurch gekennzeichnet, dass** bei dem Aufladen des Fahrzeugs (6) an einem spezifischen Aufladeanschluss (19) die optische Führung und ein Bremsklotz (39) es dem Fahrzeug ermöglichen, sich präzise vor dem Anschluss (19) zu positionieren, wobei die Kopplungsvorrichtung im Wesentlichen aus einem Stecker (22), einer Führungsvorrichtung (23), einem halbstarren bewegbaren Arm (24) besteht, die Vorrichtung zum Betätigen des Arms (24) aus einem Elektromotor (27) besteht, dessen Achse mit einer Scheibe (28) ausgerüstet ist, die Scheibe über einen Riemen eine Mutter (29) antreibt, die mit einer zweiten Scheibe zusammenwirkt, die mit der Mutter fest verbunden ist, die Drehung des Motors (27) die Drehung der Mutter (29) bewirkt, die Drehung der Mutter eine Translation einer Schraube (34) bewirkt, die mit dem Arm (24) fest verbunden ist, der Arm in Richtung der weiblichen Führung (26) angetrieben wird, die männliche Führung einen zylindrischen Teil (30) umfasst, an dem mindestens 3 Führungen (31) und (32) befestigt sind, die männliche Führung mit der entsprechenden weiblichen Führung (26) zusammenwirkt, die mit zu diesem Zweck passenden Nuten versehen ist, die die Führungsschienen (31) und (32) unterbringen, sobald die Stecker (22) und (25) angeschlossen sind, die Fahrstreckendaten zunächst über eine kabelgebundene Verbindung oder über Glasfaser an den Zentralrechner (7) überträgt, dann die Aufladung der Batterien (38) stattfindet.

12. Automatisches privates öffentliches Transportsystem nach den Ansprüchen 1 und 6, **dadurch gekennzeichnet, dass** die Einrichtung eines Netzwerks für eine feine Geopositionierung durch jede Art von autorisiertem Betreiber oder autorisierter Anwendung genutzt wird, der/die über eine RFID-Antenne (13) verfügt, die mit einem Rechner zusammenarbeitet, der in der Lage ist, jede eindeutige Identifizierung (11) der RFID-Chips (13) zu lesen und ihre Koordinaten (x, y, z) daraus zu bestimmen.

13. Automatisches privates öffentliches Transportsystem nach Anspruch 1, **dadurch gekennzeichnet, dass** falls der farbige Streifen (10) aus atmosphärischen Gründen, Schnee, Eis, Sand oder aus jeglichem anderem Grund nicht sichtbar ist, das Trägheitsnavigationssystem (1) in Kombination mit dem Rechner (2), der mit einer eigenen Berechnungseinheit (18) und angepassten Servomotoren versehen ist, die an eine Bedieneinheit (3) angeschlossen sind, auf die Richtungseinheit (40) wirkt, es dem Fahrzeug ermöglicht, die programmierte Fahrstrecke weiter zu verfolgen, wobei dem virtuellen Computerstreifen (20) gefolgt wird, das in dem Speicher (41) des Rechners (2) gespeichert ist.

14. Automatisches privates öffentliches Transportsystem nach einem der vorstehenden Ansprüche, **dadurch gekennzeichnet, dass** das System bimodal ist, da es über zwei Funktionsarten verfügt: elektrisch und automatisch in einer Stadt, oder thermisch und mit manueller Lenkung außerhalb der Stadt; in einem manuellen Lenkmodus die Vordersitze um eine halbe Umdrehung schwenken, die Vordersitze zum Sicherstellen dieser Drehfunktion ausgelegt sind.

## Claims

1. An automatic private public transport system comprising a plurality of vehicles (6), means (19) for recharging said vehicles, each vehicle (6) being provided with an on-board computer (2) and communication means (8), in particular for communicating with a computer system (7), each vehicle (6) is provided with a set of safety sensors, the vehicle (6) is configured to follow a colored strip (10) by opto-guidance, said colored strip incorporates RFID-type chips (9) or transponders, each vehicle comprises means for reading (13) said chips RFID,
**characterized in that**, when a vehicle (6) follows the colored strip (10) by opto-guidance, an inertial unit (1) equipped with a three-axis accelerometer (4), a three-axis gyroscope (5) and a compass, is capable, with the assistance of the computer (2), and ad hoc software, to process the parameters of the vehicle's movements (6), namely : a starting point, an initial speed, a direction, accelerations, durations and all the successive variations of said parameters, the processing of the afore mentioned data enables the inertial unit (1) assisted by an on-board computer (2), to calculate and define a succession of points on the vehicle's route, the concatenation of the segments defined by the consecutive points of the path identified by the inertial unit (1), defines a virtual computer strip (20) of the colored band (10) ), i.e. a digitization of the path travelled, the data of which is stored in a memory (41) of the on-board computer (2), enabling the vehicle (6) to continue the programmed path by following the virtual computer strip (20) stored in a memory (41) of the on-board computer (2) if the colored band (10) is no longer being visible.

2. Automatic private public transport system according to claim 1, **characterized in that**, means for recharging (19) consists of a station (19) capable of communicating with the vehicle (6) using data exchange means between the station (19) and the on-board computer (2), in order to transmit all the data on the journeys made by the vehicle, reproducing the virtual computer images (20) of the colored strip (10) of the journeys made, to the computer system (7), and to all the data corresponding to the journeys of each vehicle when the vehicle (6) is recharging its battery (38) via the recharging point (19).

3. Automatic private public transport system according to claim 1, **characterized in that** the frequency of identification of the points on the route by the inertial unit (1) is calculated in relation to speed, so that the distance between two consecutive points on any segment of the path is the same length.

4. Automatic private public transport system according to claim 1, **characterized in that** the virtual strip (20) resulting from the concatenation of the segments of the journey is certified by a block chain, since each segment which constitutes it is certified by said blockchain, the said blockchain being a certified, unalterable database operating without a central control body, but with distributed control over several servers that continuously and mutually control each other, making any falsification impossible.

5. Automatic private public transport system according to any one of the preceding claims, **characterized in that**, each time the on-board computer (2) of the vehicle (6) detects a drift in relation to the precise location provided by the RFID chip (9) integrated on the colored strip (10), a correction is made to the trajectory thanks to the action of the steering (40) via the control unit (3), and the inertial unit (1) is recalibrated on the precise coordinates provided by the RFID.

6. Automatic private collective transport system according to claim 1, **characterized in that** a unique identifying code (11) is stored in a memory of each chip RFID (9), to each unique identifying code of each RFID chip corresponds the precise coordinates (x, y, z) of said RFID chip, the coordinates (x, y, z) of all the RFID chips are stored in the on-board computer (2) of the vehicles (6).

7. Automatic private collective transport system according to any one of the preceding claims, **characterized in that**, a train of vehicles (35) is capable to follow a lead vehicle (36) following the colored strip (10) or the corresponding virtual computer strip (20), the lead vehicle (36) being capable to store in its on-board computer (2) all the destinations of each vehicle, via a secure link (33), to coordinate the accelerations, braking, obstacle avoidance and direction changes of one or more vehicles of the train, and slowing down the vehicle or vehicles immediately following the vehicle or vehicles changing direction, in order to allow the vehicle or vehicles to change lanes to join another colored band (10) or the corresponding virtual computer band (20).

8. Automatic private public transport system according to any one of the following principles preceding claims, **characterized in that**, outside built-up areas, the RFID chips (9) are spaced further apart, every 100 to 1000 meters, fixed to short but clearly visible colored discontinuous strips (10), of 3 meters for instance, the coordinates (x, y, z) of all the RFID chips being stored in the on-board computer (2) of all the vehicles (6) so that vehicle, travelling on said colored discontinuous strip (10), with the assistance of the computer (2) is capable to recalibrating the inertial unit on the coordinates (x, y, z) of any chip crossed by the vehicle.

9. Automatic private public transport system according to claim 1, **characterized in that** the on-board computer (2) and the computer system (7) are provided with an expert system associated with software and augmented intelligence algorithms (AI), which make it possible to store all the information relating to the journeys and to all possible situations in order to incorporate the experience acquired during use, enabling the Al to make the same decision as an informed human.

10. Automatic private public transport system according to claim 1, **characterized in that** there is a plurality of inertial units, the coherence of the data supplied by each of said inertial units (1) is monitoring by the on-board computer (2) in combination with the AI, the said on-board computer (2) storing decision theory algorithms, so that the AI makes the best decision in all possible situations.

11. Automatic private public transport system according to claim 2, **characterized in that**, when recharging the vehicle (6) at a specific recharging terminal (19), opto-guidance and a wheel chock (39) enable said vehicle to be positioned accurately in front of the terminal (19), the coupling device consists essentially of a male plug (22), a guide device (23) and a semi-rigid mobile arm (24), the device for actuating the arm (24) consists of an electric motor (27), the shaft of which is fitted with a pulley (28), said pulley drives a nut (29) via a belt cooperating with a second pulley integral with the nut, the rotation of the motor (27) causes the rotation of the nut (29), said rotation of the nut causes a translation of a screw (34) which is integral with the arm (24), said arm is driven towards the female guide (26), the male guide comprises a cylindrical part (30) on which at least 3 guides (31) and (32) are fixed, the male guide cooperates with the corresponding female guide (26), provided with ad hoc grooves receiving the guides (31) and (32), once the plugs (22) and (32) have been connected, the journey data is first transmitted to the central computer (7) via a wired or fiber optic link, and then the batteries (38) are recharged.

12. Automatic private public transport system according to claims 1 and 6, **characterized in that** a fine geo-positioning network can be used by any type of authorized operator or application, having an RFID antenna (13) cooperating with a computer capable of reading any unique identifier (11) of the RFID chips (13), and determining its coordinates (x, y, z).

13. Automatic private public transport system according to claim 1, **characterized in that**, if the colored stripe (10) is not visible, for atmospheric reasons, snow, ice, sand, or for any other reason, the inertial unit (1) in combination with the computer (2) provided with a dedicated calculation unit (18), and adapted servomotors, connected to a control unit (3), acting on the steering unit (40), enables the vehicle to continue the programmed route, following the stripe virtual computer (20), stored in the memory (41) of the computer (2).

14. Automatic private public transport system according to any one of the preceding claims, **characterized in that** said system is dual-mode, **in that** it has two modes of operation: electric and automatic in town, or thermal and manual driving outside town; in manual driving mode, the front seats rotates by half a turn, said seats are designed to perform this rotating function.
